Europäisches Patentamt

European Patent Office

Office européen des brevets

(11) Veröffentlichungsnummer: **0 049 420**
**B1**

(12) **EUROPÄISCHE PATENTSCHRIFT**

(45) Veröffentlichungstag der Patentschrift: 24.04.85

(51) Int. Cl.⁴: **B 60 B 11/02**

(21) Anmeldenummer: **81107554.8**

(22) Anmeldetag: **23.09.81**

(54) Zwillingsrad.

(30) Priorität: 02.10.80 US 193346

(43) Veröffentlichungstag der Anmeldung:
14.04.82 Patentblatt 82/15

(45) Bekanntmachung des Hinweises auf die
Patenterteilung:
24.04.85 Patentblatt 85/17

(84) Benannte Vertragsstaaten:
AT DE FR GB IT SE

(56) Entgegenhaltungen:
EP-A-0 021 649
DE-A-2 405 084
DE-A-2 702 715
FR-A-2 334 513
FR-A-2 475 991
US-A-2 281 541

(73) Patentinhaber: **DEERE & COMPANY**
**1 John Deere Road**
**Moline Illinois 61265 (US)**

(72) Erfinder: **Ahlschwede, Brian Alvin**
**Edgebrook**
**Waterloo Iowa 50704 (US)**

(74) Vertreter: **Gramm, Werner, Prof. Dipl.-Ing. et al**
**Patentanwälte Gramm + Lins Theodor-Heuss-**
**Strasse 2**
**D-3300 Braunschweig (DE)**

Courier Press, Leamington Spa, England.

## Beschreibung

Die Erfindung betrifft ein Zwillingsrad, bestehend aus einem über eine Radachse angetriebenen, am Fahrzeug montierten Rad, das einen Radkörper, eine von diesem getragene Felge und auf dieser einen Reifen aufweist, und aus einem äußeren Hilfsrad mit Felge, Reifen und einer Kupplung zur Übertragung der Drehbewegung vom Innenrad auf das Hilfsrad, wobei die Kupplung aus mehreren, um den Radumfang angeordneten Hebeln besteht, die an einer Abstützung für die Felge des Hilfsrades angelenkt und durch Beaufschlagung eines gegenüber der Abstützung verstellbaren Kupplungselementes in ihre Kupplungsstellung bzw. aus dieser heraus verschwenkbar sind, wobei in Kupplungsstellung die Hebelenden in entsprechende Ausnehmungen des Innenrades eingreifen.

Bei einer vorbekannten Ausführungsform besteht die Abstützung für die Felge des Hilfsrades aus fünf Abstützstreben, die jeweils durch eine sich im wesentlichen radial erstreckende Speiche gebildet werden, deren radial außenliegendes Ende in einen sich im wesentlichen radial erstreckenden Arm übergeht, dessen von der Speiche abgewandtes Ende an der Felge des Hilfsrades befestigt ist. An der Verbindungsstelle zwischen Speiche und Arm ist jeweils einer der genannten Hebel angelenkt. Dieser Hebel ist als zweiarmiger Winkelhebel ausgebildet, der in Kupplungsstellung mit seinem radial außenliegenden Hebelende in eine Tasche der Felge des Innenrades eingreift. Das radial innenliegende Hebelende ist gegabelt und übergreift einen Radialflansch, der einen Teil des genannten Kupplungselementes bildet. Letzteres ist als Gewindespindel ausgebildet, die mit der Radachse fluchtet, in einer Spindelmutter der genannten Abstützung geführt ist und zwei Radialarme aufweist, die ein Verdrehen der Spindel von Hand ohne Zuhilfenahme eines Werkzeuges ermöglichen. Jeder Hebel ist unmittelbar zwischen zwei Speichern seitlich geführt. Durch Verdrehen der Spindel verschiebt sich ihr Radialflansch in Axialrichtung und verschwenkt dadurch die fünf Hebel in ihre Kupplungsstellung bzw. aus dieser heraus.

Ein wesentlicher Nachteil dieser vorbekannten Ausführungsform liegt darin, daß das Drehmoment vom Innenrad über dessen Felge auf die genannten Hebel und von dort über die Speichern bzw. Arme auf das Hilfsrad übertragen wird. Nachteilig ist ferner, daß das Hilfsrad bei seiner Montage um bis zu 36 Winkelgrad gedreht werden muß, um die Hebelenden in ihre Eingriffsstellung gegenüber den Ausnehmungen in der Felge des Innenrades zu bringen. Nachteilig ist schließlich auch, daß sich die vorbekannte Konstruktion dann nicht verwenden läßt, wenn sich die Radachse durch das Innenrad hindurch verhältnismäßig weit nach außen erstreckt, z.B. wenn es sich um eine Zahnstangenachse handelt, die sich durch die Ebene des Hilfsrades hindurch erstreckt.

Der Erfindung liegt somit die Aufgabe zugrunde, das eingangs erläuterte Zwillingsrad hinsichtlich der Drehmomentübertragung vom Innenrad auf das Hilfsrad zu verbessern.

Diese Aufgabe wird gemäß der Erfindung dadurch gelöst, daß eine Ringscheibe axial fluchtend mit dem Radkörper des Innenrades über das Drehmoment übertragende Verbindungsmittel verbunden ist und die Ausnehmungen für die Hebelenden aufweist.

Durch die erfindungsgemäße Konstruktion wird das Drehmoment von der Radachse über den Radkörper des Innenrades unmittelbar auf die genannte Ringscheibe und von dort über die Hebel auf das Hilfsrad übertragen. Die Übertragung der Drehbewegung erfolgt somit nicht mehr über die Felge des Innenrades.

Da in der Ringscheibe mehrere Ausnehmungen zum Kupplungseingriff der Hebelenden als Hebel vorgesehen werden können, genügt bei der Montage des Hilfsrades jeweils nur eine sehr geringe Drehung des Hilfsrades, um die Hebelenden in ihre Kupplungsstellung gegenüber den Ausnehmungen in der Ringscheibe zu bringen.

Erfindungsgemäß kann dabei die Ringscheibe mit lichtem Abstand von der Felge des Innenrades an dessem Radkörper befestigt sein.

Besonders vorteilhaft ist es, wenn die Ringscheibe eine mittige Öffnung zum Durchtritt der Radachse aufweist. Dadurch läßt sich die neue Konstruktion auch bei sich weit über das Innenrad hinaus erstreckenden Radachsen verwenden.

In einer zweckmäßigen Ausführungsform kann die Ringscheibe einen sich radial erstreckenden Ringflansch aufweisen, der in angenähert axialer Richtung in einen Ringbund übergeht, wobei zwischen Ringflansch und Ringbund eine Vielzahl von diese Teile in bestimmter Zuordnung zueinanderhaltenden Rippen vorgesehen sind. Dabei können sich die Ausnehmungen zur Aufnahme der Hebelenden in Form von Radialbohrungen durch den Ringbund erstrecken. Die kuppelnde Drehverbindung zwischen Hilfsrad und Innenrad wird zusätzlich noch dadurch erleichtert, daß jede Ausnehmung in der Ringscheibe als konische, sich radial nach außen verjüngende Bohrung und das in diese Bohrung eingreifende Hebelende entsprechend kegelstumpfförmig ausgebildet sind.

Besonders vorteilhaft ist es, wenn die genannte Abstützung ein zentrisch angeordnetes Bauteil mit einer Axialbohrung zur Aufnahme eines Abschnitts der Radachse aufweist. Dabei kann das genannte Bauteil eine Buchse sein, die über mehrere Abstützstreben am Hilfsrad festgelegt ist.

Dabei ist es zweckmäßig, wenn jede Abstützstrebe auf einer sich im wesentlichen radial erstreckenden Speiche besteht, deren radial innenliegendes Ende an der Buchse befestigt ist, und dessen radial außenliegendes Ende in einen sich im wesentlichen axial erstreckenden Arm übergeht, dessen von der Speiche abgewandtes Ende an der Felge des Hilfsrades befestigt ist.

Weitere Merkmale sind Gegenstand der Unteransprüche.

In der Zeichnung ist eine als Beispiel dienende Ausführungsform der Erfindung dargestellt. Es zeigen:

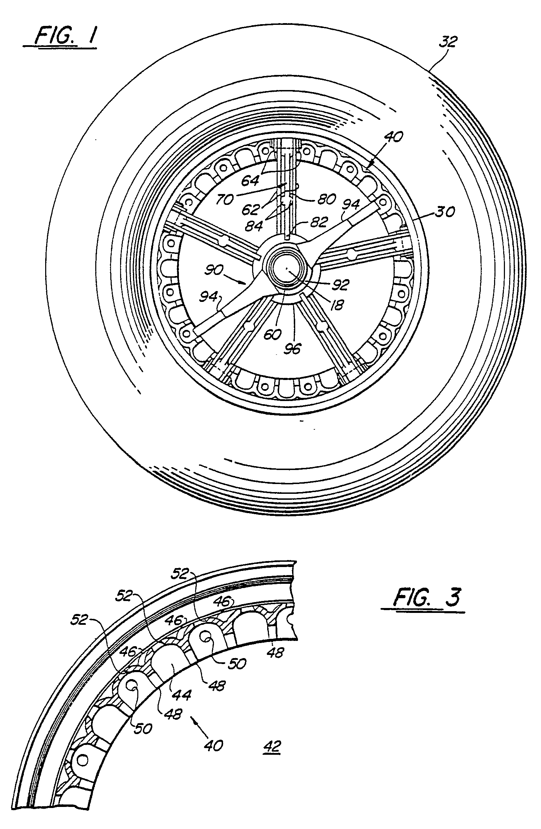

Figur 1 — ein Zwillingsrad in Seitenansicht;

Figur 2 — im Ausschnitt einen Axialschnitt durch das Zwillingsrad; und

Figur 3 — eine Ansicht eines Ringscheibensegmentes in Blickrichtung der Pfeile 3 in Figur 2.

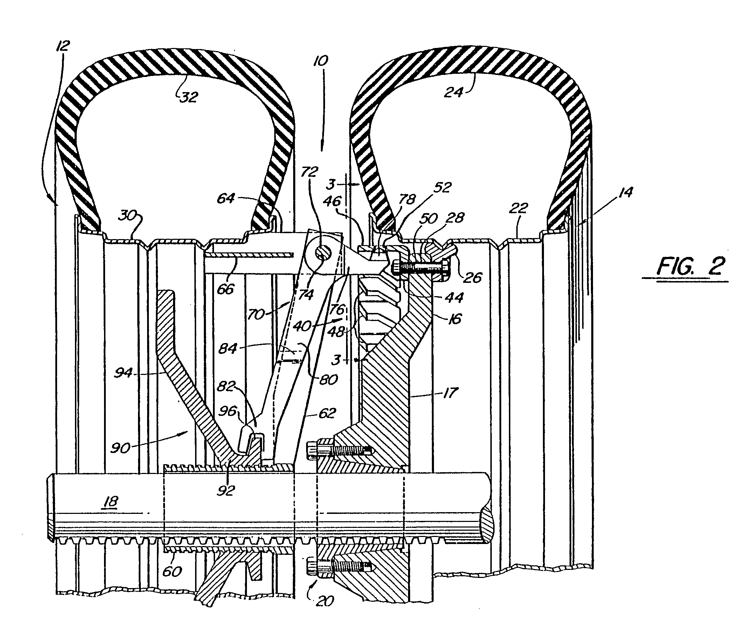

Über eine Verbindungseinrichtung 10 wird ein äußeres Rad oder Hilfsrad 12 mit einem inneren, drehfest auf einer Radachse sitzenden Innenrad 14 gekuppelt. Das Innenrad 14 besteht aus einem Radkörper 16 mit einer Nabe 17, die mit einer üblichen Zahnstangenachse 18 über eine konventionelle Keilverbindung 20 drehfest verbunden ist. Eine Felge 22 trägt in üblicher Weise einen Reifen 24 und ist am Radkörper 16 über sechzehn Knaggen 26 verbunden (von denen einer in Figur 2 dargestellt ist), die am Radkörper 16 mit Schraubbolzen 28 befestigt sind (von denen ebenfalls einer in Figur 2 gezeigt ist). Das Hilfsrad 12 umfaßt eine übliche Felge 30, auf die ein Reifen 32 aufgezogen ist.

Die Verbindungseinrichtung 10 umfaßt eine einteilige Ringscheibe 40, durch deren mittige Öffnung 42 sich die Nabe 17 des Innenrades 16 sowie die Radachse 18 erstrecken. Die Ringscheibe 40 besteht aus einem Ringflansch 44, zweiunddreißig abgerundeten, sich axial erstreckenden und zusammen einen Ringbund 46 bildenden Segmenten und zweiunddreißig sich axial und radial erstreckenden Rippen 48, die Ringflansch 44 und Ringbund 46 miteinander verbinden. Der Ringflansch 44 weist auf seinem Umfang sechzehn in gleichem Abstand voneinander angeordnete Axialbohrungen 50 auf, durch die sich die Schraubbolzen 28 erstrecken, so daß sich die Ringscheibe 40 am Radkörper 16 hinsichtlich der Radachse 16 koaxial befestigen läßt und zwar mit lichtem Abstand von der Felge 22, wie es Figur 2 deutlich zeigt. Jedes Segment des Ringbundes 46 weist eine konische, sich radial nach außen verjüngende Radialbohrung 52 auf.

Die Verbindungseinrichtung 10 umfaßt ferner eine Abstützung, die drehfest mit dem Hilfsrad 12 verbunden ist. Diese Abstützung besteht aus einer Buchse 60, die mit einem Außengewinde versehen ist und eine Axialbohrung aufweist, deren Durchmesser größer ist als der der Radachse 18, die sich koaxial mit lichtem Abstand zur Innenwandung der genannten Buchse durch diese erstreckt. An dem innenliegenden Ende der Buchse 60 sind fünf Paare von mit Abstand nebeneinander angeordneten Speichen 62 befestigt, die sich radial nach außen und etwas nach innen in Richtung auf das Innenrad 14 erstrecken und mit ihrem radial außenliegenden Ende am innenliegenden Ende eines im wesentlichen axial liegenden Armes 64 befestigt sind. Die außenliegenden Enden aller Arme 64 sind mit der Felge 30 des Hilfrades 12 verschweißt oder sonstwie befestigt. Ein Stützband 66 verbindet jedes Paar Arme 64 zur Erzielung einer höheren Steifigkeit.

Zwischen jedem Paar Speichen 62 bzw. Armen 64 ist ein Hebel 70 über einen Zapfen 72 angelenkt, der sich durch eine Bohrung 74 des Hebels erstreckt. Ein erster Arm 76 des Hebels 70 erstreckt sich von dem Anlenkpunkt und läuft in ein kegelstumpfförmiges Ende 78 aus, das in Kupplungsstellung in die konische Bohrung 52 der Ringscheibe 40 eingreift. Ein zweiter Arm 80 des Hebels 70 erstreckt sich von dessen Anlenkpunkt im wesentlichen radial nach innen und endet in einer Gabel 82. Außerdem weist jeder Arm 80 auf seinen beiden Seiten Schultern 84 auf, die an den Speichen 62 anliegen und so die seitliche Bewegung der Hebel 70 gegenüber den Speichen 62 begrenzen.

Die Verbindungseinrichtung 10 umfaßt schließlich noch ein Kupplungselement 90, das mit einem ein Innengewinde aufweisenden Buchsenteil 92 auf das Außengewinde der Buchse 60 der Abstützung geschraubt ist. Von dem außenliegenden Ende des Buchsenteils 92 erstrecken sich zwei Radialarme 94, während am innenliegenden Ende des Buchsenteils 92 ein Radialflansch 96 vorgesehen ist, der von den gabelförmigen Enden 82 aller Hebelarme 80 übergriffen wird.

Die Handhabung wird folgermaßen durchgeführt: Um das Hilfsrad 12 mit dem Innenrad 14 zu verbinden, wird zuerst das Kupplungselement 90 auf dem Außengewinde der Buchse 60 gedreht, um so die kegelstumpfförmigen Enden 78 aller Hebel 70 radial nach innen zu verschwenken, so daß sie von dem Ringbund 46 der Ringscheibe 40 freikommen. Das Hilfsrad 12 wird dann auf die Radachse 18 nach innen gegen das Innenrad 14 geschoben, bis die kegelstumpfförmigen Hebelenden 78 den zugeordneten konischen Bohrungen 52 in der Ringscheibe 40 gegenüber liegen. Da diese zweiunddreißig Bohrungen 52 einen Winkelabstand von nicht mehr als 11,25° aufweisen, braucht das Hilfsrad 12 nur um maximal 5,625° gedreht zu werden, damit die Hebelenden 78 den genannten Bohrungen 52 gegenüber liegen.

Die Bedienungsperson dreht dann das Kupplungselement 90 auf der Buchse 60 nach innen und verschwenkt dadurch die Hebel 70, bis deren kegelstumpfförmigen Enden 78 in die konischen Bohrungen 52 eingreifen und fest an deren Innenrandung anliegen. In dieser Stellung hält die Verbindungseinrichtung 10 die Buchse 60 koaxial zu und mit lichtem Abstand von der Radachse 18.

Wird von dem nicht dargestellten Fahrzeugantrieb ein Drehmoment auf die Radachse 18 übertragen, so wird dieses Drehmoment auf die Felge 30 des Hilfsrades 12 übertragen über Radkörper 16, Schraubbolzen 28, Ringscheibe 40, Hebel 70 und Speichen 62 und Arme 64. Die Drehmomentübertragung erfolgt also nicht über die Felge 22 des Innenrades 14. Dadurch wird verhindert, daß die Felge 22 des Innenrades 14 durch unzulässig große Drehmomente beschädigt wird.

Zum Abbau des Hilfsrades 12 vom Innenrad 14 braucht lediglich das Kupplungselement 90 auf der Buchse 60 nach außen verdreht zu werden. Dadurch werden die Hebel 70 mit ihren Hebelenden 78 aus den Bohrungen 52 heraus geschwenkt, so daß das Hilfsrad 12 in axialer Richtung abgezogen werden kann.

## Patentansprüche

1. Zwillingsrad, bestehend aus einem über eine Radachse (18) angetriebenen, am Fahrzeug montierten Rad (Innenrad 14), das einen Radkörper (16), eine von diesem getragene Felge (22) und auf dieser einen Reifen (24) aufweist, und aus einem äußeren Hilfsrad (12) mit Felge (30), Reifen (32) und einer Kupplung (10) zur Übertragung der Drehbewegung vom Innenrad auf das Hilfsrad, wobei die Kupplung aus mehreren, um den Radumfang angeordneten Hebeln (70) besteht, die an einer Abstützung (60, 62, 64, 66) für die Felge (30) des Hilfsrades (12) angelenkt und durch Beaufschlagung eines gegenüber der Abstützung (60—66) verstellbaren Kupplungselementes (90) in ihre Kupplungsstellung bzw. aus dieser heraus verschwenkbar sind, wobei in Kupplungsstellung die Hebelenden (78) in entsprechende Ausnehmungen (52) des Innenrades (14) eingreifen, dadurch gekennzeichnet, daß eine Ringscheibe (40) axial fluchtend mit dem Radkörper (16) des Innenrades (14) über das Drehmoment übertragende Verbindungsmittel (28) verbunden ist und die Ausnehmungen (52) für die Hebelenden (78) aufweist.

2. Zwillingsrad nach Anspruch 1, dadurch gekennzeichnet, daß die Ringscheibe (40) mit lichtem Abstand von der Felge (22) des Innenrades (14) an dessen Radkörper (16) befestigt ist.

3. Zwillingsrad nach Anspruch 1 oder 2, dadurch gekennzeichnet, daß die Ringscheibe (40) eine mittige Öffnung (42) zum Durchtritt der Radachse (18) aufweist.

4. Zwillingsrad nach Anspruch 1, 2 oder 3, dadurch gekennzeichnet, daß die Ringscheibe (40) einen sich radial erstreckenden Ringflansch (44) aufweist, der in angenähert axialer Richtung in einen Ringbund (46) übergeht, wobei zwischen Ringflansch und Ringbund eine Vielzahl von diese Teile in bestimmter Zuordnung zueinander haltenden Rippen (48) vorgesehen sind.

5. Zwillingsrad nach Anspruch 4, dadurch gekennzeichnet, daß die Rippen (48) jeweils zwischen benachbarten Ausnehmungen (52) angeordnet sind.

6. Zwillingsrad nach Anspruch 4 oder 5, dadurch gekennzeichnet, daß sich die Ausnehmungen (52) zur Aufnahme der Hebelenden (78) in Form von Radialbohrungen durch den Ringbund (46) erstrecken.

7. Zwillingsrad nach einem der vorhergehenden Ansprüche, dadurch gekennzeichnet, daß jede Ausnehmung (52) in der Ringscheibe (40) als konische, sich radial nach außen verjüngende Bohrung und das in diese Bohrung eingreifende Hebelende (78) entsprechend kegelstumpfförmig ausgebildet sind.

8. Zwillingsrad nach einem der vorhergehenden Ansprüche, dadurch gekennzeichnet, daß die Ringscheibe (40) einteilig ausgebildet ist.

9. Zwillingsrad nach einem der vorhergehenden Ansprüche, dadurch gekennzeichnet, daß die genannte Abstützung (60—66) ein zentrisch angeordnetes Bauteil (60) mit einer Axialbohrung zur Aufnahme eines Abschnitts der Radachse (18) aufweist.

10. Zwillingsrad nach Anspruch 9, dadurch gekennzeichnet, daß das genannte Bauteil eine Buchse (60) ist, die über mehrere Abstützstreben (62, 64) am Hilfsrad (12) festgelegt ist.

11. Zwillingsrad nach Anspruch 10, dadurch gekennzeichnet, daß jede Abstützstrebe (62, 64) aus einer sich im wesentlichen radial erstreckenden Speiche (62) besteht, deren radial innenliegendes Ende an der Buchse (60) befestigt ist, und dessen radial außenliegendes Ende in einen sich im wesentlichen axial erstreckenden Arm (64) übergeht, dessen von der Speiche (62) abgewandtes Ende an der Felge (30) des Hilfsrades (12) befestigt ist.

12. Zwillingsrad nach Anspruch 9, 10 oder 11, dadurch gekennzeichnet, daß der Durchmesser der Axialbohrung der Buchse (60) größer ist als der der Radachse (18), so daß die miteinander gekuppelten Ringscheibe (40) und Hebel (70) zusammen mit der Abstützung (60—66) die Buchse (60) koaxial mit lichtem Abstand zur Radachse (18) halten.

13. Zwillingsrad nach einem der Ansprüche 9 bis 12, dadurch gekennzeichnet, daß das Kupplungselement (90) auf der Buchse (60) sitzt.

14. Zwillingsrad nach Anspruch 13, dadurch gekennzeichnet, daß das Kupplungselement (90) mit einem ein Innengewinde aufweisenden Buchsenteil (92) auf ein Außengewinde der genannten Buchse (60) geschraubt ist.

15. Zwillingsrad nach einem der vorhergehenden Ansprüche, dadurch gekennzeichnet, daß das Kupplungselement (90) einen Radialflansch (96) aufweist, der von einem gegabelten Endteil (82) aller Hebel (70) übergriffen wird.

## Revendications

1. Roue jumelée constituée par une roue (roue intérieure 14) montée sur le véhicule et entraînée à partir d'un essieu ou arbre de roue (18), cette roue comprenant un corps (16), une jante (22) portée par celui-ci et un bandage pneumatique (24) adapté sur cette jante, et par une roue auxiliaire extérieure (12) munie d'une jante (30), d'un bandage pneumatique (32) et d'un accouplement (10) pour transmettre le mouvement de rotation de la roue intérieure à la roue auxiliaire, cet accouplement étant constitué par plusieurs leviers (70) disposés autour de la circonférence de la roue, ces leviers étant articulés sur un support (60, 62, 64, 66) prévu pour la jante (30) de la roue auxiliaire (12) et pouvant être déplacés par pivotement jusque dans leur position d'accouplement ou à partir de celle-ci par l'actionnement d'un élément d'accouplement (90) déplaçable par rapport au support (60—66), les extrémités (78) des leviers s'engageant, dans la position d'accouplement, dans des évidements appropriés (52) de la roue intérieure (14), caractérisée en ce qu'une couronne (40) est reliée dans une position d'alignement axial au corps (16) de la roue intérieure (14) par des organes de liaison (28) assurant la transmission d'un couple, les évidements (52) destinés aux extrémités (78) des leviers étant prévus dans cette couronne (40).

2. Roue jumelée suivant la revendication 1, caractérisée en ce que la couronne (40) est fixée sur le corps (16) de la roue intérieure (14) en ménageant un écartement par rapport à sa jante (22).

3. Roue jumelée suivant la revendication 1 ou 2, caractérisée en ce que la couronne (40) présente un orifice médian (42) pour le passage de l'arbre de roue (18).

4. Roue jumelée suivant la revendication 1, 2 ou 3, caractérisée en ce que la couronne (40) présente une bride annulaire (44) orientée radialement, qui se prolonge dans une direction sensiblement axiale par une collerette (46), un grand nombre de nervures (48) maintenant ces parties dans une relation déterminée l'une par rapport à l'autre étant prévues entre la bride et la collerette.

5. Roue jumelée suivant la revendication 4, caractérisée en ce que les nervures (48) sont disposées chaque fois entre des évidements voisins (52).

6. Roue jumelée suivant la revendication 4 ou 5, caractérisée en ce que les évidements (52) servant à la réception des extrémités (78) des leviers s'étendent à travers la collerette (46) à la manière de perçages radiaux.

7. Roue jumelée suivant l'une quelconque des revendications précédentes, caractérisée en ce que chaque évidement (52) de la couronne (40) se présente sous la forme d'un perçage conique allant en diminuant de dimension radialement vers l'extérieur et en ce que l'extrémité (78) des leviers s'engageant dans ce perçage a une forme tronconique correspondante.

8. Roue jumelée suivant l'une quelconque des revendications précédentes, caractérisée en ce que la couronne (40) est d'un seul tenant.

9. Roue jumelée suivant l'une quelconque des revendications précédentes, caractérisée en ce que le support précité (60—66) comprend un organe (60) disposé centralement et présentant un alésage axial pour la réception d'une partie de l'arbre de roue (18).

10. Roue jumelée suivant la revendication 9, caractérisée en ce que cet organe est constitué par un manchon (60) qui est fixé sur la roue extérieure (12) par plusieurs contrefiches d'appui (62, 64).

11. Roue jumelée suivant la revendication 10, caractérisée en ce que chaque contrefiche d'appui (62, 64) est constituée par un rayon (62) s'étendant en principe radialement, dont l'extrémité orientée radialement vers l'intérieur est fixée sur le manchon (60) et dont l'extrémité orientée radialement vers l'extérieur se prolonge par un bras (64) s'étendant en principe axialement, dont l'extrémité opposée au rayon (62) est fixée sur la jante (30) de la roue auxiliaire (12).

12. Roue jumelée suivant la revendication 9, 10 ou 11, caractérisée en ce que le diamètre de l'alésage axial du manchon (60) est supérieur à celui de l'arbre de roue (18), de sorte que la couronne (40) et les leviers (70) accouplés ensemble maintiennent, conjointement au support (60—66), le manchon (60) dans une position coaxiale à l'arbre de roue (18) et écartée de celui-ci.

13. Roue jumelée suivant l'une quelconque des revendications 9 à 12, caractérisée en ce que l'élément d'accouplement (90) repose sur le manchon (60).

14. Roue jumelée suivant la revendication 13, caractérisée en ce que l'élément d'accouplement (90) est vissé sur un filetage extérieur du manchon précité (60) par une partie en forme de douille ou moyeu (92) muni d'un filetage intérieur.

15. Roue jumelée suivant l'une quelconque des revendications précédentes, caractérisée en ce que l'élément d'accouplement (90) présente une bride radiale (96) qui est coiffée par une partie en forme de chape (82) de tous les leviers (70).

**Claims**

1. Dual wheel assembly comprising a vehicle-mounted wheel (inner wheel 14) actuated by a wheel axle (18); said wheel having a wheel body (16), a rim (22) attached to said wheel body and a tire (24) thereupon, further comprising an outer auxiliary wheel (12) having a rim (30), a tire (32) and an attaching device (10) for transmitting rotation from said inner wheel to said auxiliary wheel, whereby said attaching device includes a plurality of levers (70) arranged on the circumference of the wheel, said levers being pivotally attached to a support structure (60, 62, 64, 66) for said rim (30) of the auxiliary wheel (12) and being movable into their coupling position and uncoupling position, respectively, by actuating a coupling member (90) which is adjustable with respect to said support structure (60—66), whereby in coupling position the lever ends (78) are in engagement with corresponding apertures (52) of said inner wheel (14), characterized in that an annular-shaped member (40) is in axial alignment attached to the wheel body (16) of said inner wheel (14) by torque-transmitting connecting means (28) and has said apertures (52) for said lever ends (78).

2. Dual wheel assembly according to claim 1, wherein said annular-shaped member (40) is fixed to said wheel body (16) in spaced-apart relationship from said rim (22) of said inner wheel (14).

3. Dual wheel assembly according to claim 1 or 2, wherein said annular-shaped member (40) includes a central opening (42) for receiving said wheel axle (18).

4. Dual wheel assembly according to claim 1, 2 or 3, wherein said annular-shaped member (40) comprises a radially extending annular flange (44) changing in approximately axial direction into a collar (46), whereby between the annular flange and said collar a plurality of ribs (48) is provided maintaining those parts in predetermined relationship.

5. Dual wheel assembly according to claim 4, wherein said ribs (48) are disposed between adjacent pairs of the apertures (52).

6. Dual wheel assembly according to claim 4 or 5, wherein for receiving the lever ends (78) said apertures (52) are in the form of radial bores extending through the collar (46).

7. Dual wheel assembly according to one of the preceding claims, wherein in the annular-shaped member (40) each aperture (52) is in the form of a radially-extending outwards tapered bore, and the lever end (78) being in engagement with said bore has a corresponding frustoconical surface.

8. Dual wheel assembly according to one of the preceding claims, wherein said annular-shaped member (40) is comprised of a single unitary structure.

9. Dual wheel assembly according to one of the preceding claims, wherein said support structure (60—66) comprises a centrally arranged member (60) defining an axial bore therein for receiving a portion of said wheel axle (18).

10. Dual wheel assembly according to claim 9, wherein said member is a sleeve (60) being fixed via a plurality of support members (62, 64) to the auxiliary wheel assembly (12).

11. Dual wheel assembly according to claim 10, wherein each support member (62, 64) comprises a generally radially extending strut (62) with a radial inner end fixed to said sleeve (60) and with a radial outer end changing into a generally axially extending arm (64), the end of said arm (64) being averted from said strut (62) is fixed to the rim (30) of said auxiliary wheel (12).

12. Dual wheel assembly according to claim 9, 10 or 11, wherein the diameter of the axial bore of said sleeve (60) is larger than the diameter of the wheel axle (18), so that the interlocked annular-shaped member (40) and levers (70) cooperate together with said support structure (60—66) to maintain the sleeve (60) is spaced-apart coaxial relationship to the wheel axle (18).

13. Dual wheel assembly according to one of claims 9 to 12, wherein said coupling member (90) is mounted on said sleeve (60).

14. Dual wheel assembly according to claim 13, wherein said coupling member (90) is screwed with an inside threaded sleeve portion (92) onto an external thread of said sleeve (60).

15. Dual wheel assembly according to one of the preceding claims, wherein said coupling member (90) includes a radially extending flange (96) being received by a bifurcated end portion (82) of all levers (70).

FIG. 1

FIG. 3

FIG. 2

0 049 420